(19)

Europäisches
Patentamt

European
Patent Office

Office européen
des brevets

(11) **EP 3 360 369 B1**

(12) **EUROPEAN PATENT SPECIFICATION**

(45) Date of publication and mention
of the grant of the patent:
**01.09.2021 Bulletin 2021/35**

(51) Int Cl.:
**H04W 36/32** *(2009.01)* **H04W 36/16** *(2009.01)*
**H04W 36/00** *(2009.01)*

(21) Application number: **16745875.1**

(22) Date of filing: **07.07.2016**

(86) International application number:
**PCT/SE2016/050697**

(87) International publication number:
**WO 2017/061921 (13.04.2017 Gazette 2017/15)**

(54) **SELECTING TRANSMISSION PARAMETERS FOR AN INDOOR USER EQUIPMENT**

AUSWAHL VON ÜBERTRAGUNGSPARAMETERN FÜR EIN INNENRAUMBENUTZERGERÄT

SÉLECTION DE PARAMÈTRES DE TRANSMISSION POUR UN ÉQUIPEMENT D'UTILISATEUR D'INTÉRIEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.10.2015 US 201562237602 P**

(43) Date of publication of application:
**15.08.2018 Bulletin 2018/33**

(73) Proprietor: **Telefonaktiebolaget LM Ericsson (PUBL)**
**164 83 Stockholm (SE)**

(72) Inventors:
• **ÖKVIST, Peter**
  **SE-973 41 Luleå (SE)**
• **JÖNSSON, Tomas**
  **SE-975 98 Luleå (SE)**

(74) Representative: **Zacco Sweden AB**
**Valhallavägen 117**
**Box 5581**
**114 85 Stockholm (SE)**

(56) References cited:
EP-A1- 2 613 588          WO-A1-2015/041579
US-A- 5 987 319          US-A1- 2008 146 153
US-A1- 2013 237 245      US-A1- 2015 189 568

• KYONG-TAK CHO ET AL: "Femtocell power control by discrimination of indoor and outdoor users", WIRELESS TELECOMMUNICATIONS SYMPOSIUM (WTS), 2011, IEEE, 13 April 2011 (2011-04-13), pages 1-6, XP031903486, DOI: 10.1109/WTS.2011.5960834 ISBN: 978-1-4577-0162-7

• "3 Generation Partnership Project; Technical Specification Group Radio Access Network; Evolved Universal Terrestrial Radio Access (E-UTRA); Multiplexing and channel coding (Release 12)", 3GPP STANDARD; 3GPP TS 36.212, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V12.6.0, 22 September 2015 (2015-09-22), pages 1-95, XP050996216, [retrieved on 2015-09-22]

**EP 3 360 369 B1**

**Description**

TECHNICAL FIELD

Embodiments herein relate to a User Equipment (UE), and method therein. In particular, they relate to the handling of transmission parameters, related to whether or not the UE is indoors.

BACKGROUND

User Equipments (UE) for communication are also known as e.g., wireless devices, terminals, mobile terminals, wireless terminals and/or mobile stations. UEs are enabled to communicate wirelessly in a cellular communications network or wireless communication system, sometimes also referred to as a cellular radio system or cellular networks. The communication may be performed e.g. between two UEs, between a UE and a regular telephone and/or between a UE and a server, such as server providing video streaming service, via a Radio Access Network (RAN) and possibly one or more core networks, comprised within the cellular communications network.

UEs may further be referred to as mobile telephones, cellular telephones, computers, or tablets with wireless capability, just to mention some further examples. The UEs in the present context may be, for example, portable, pocket-storable, hand-held, computer-comprised, or vehicle-mounted mobile devices, enabled to communicate voice and/or data, via the RAN, with another entity, such as another UE or a server.

A cellular communications network covers a geographical area which is divided into cell areas, mostly overlapping each other, wherein each cell area is served by a base station, e.g. a Radio Base Station (RBS), which sometimes may be referred to as e.g. eNodeB (eNB), NodeB, B node, Base Transceiver Station (BTS), or AP (Access Point), depending on the technology and terminology used. The base stations may be of different classes such as e.g. macro eNodeB, home eNodeB, micro, or pico base station, based on transmission power and thereby also cell size. A cell is the geographical area where radio coverage is provided by the base station at a base station site. One base station, situated on the base station site, may serve one or several cells. Further, each base station may support one or several communication technologies. The base stations communicate over the air interface operating on radio frequencies with the UEs within range of the base stations. The base stations and the UEs involved in communication may also be referred to as transmitter-receiver pairs, where the respective transmitter and receiver in a pair may refer to a base station or a UE, depending on the direction of the communication. Two UEs involved in D2D communication may also be referred to as a transmitter-receiver pair. In the context of this disclosure, the expression Downlink (DL) is used for the transmission path from the base station to a UE. The expression Uplink (UL) is used for the transmission path in the opposite direction i.e. from the UE to the base station.

Universal Mobile Telecommunications System (UMTS) is a third generation mobile communication system, which evolved from the GSM, and is intended to provide improved mobile communication services based on Wideband Code Division Multiple Access (WCDMA) technology. UMTS Terrestrial Radio Access Network (UTRAN) is essentially a radio access network using wideband code division multiple access for communication with terminals. The 3GPP has undertaken to evolve further the UTRAN and GSM based radio access network technologies.

In 3rd Generation Partnership Project (3GPP) Long Term Evolution (LTE), base stations, which may be referred to as eNodeBs or even eNBs, may be directly connected to one or more core networks.

3GPP LTE radio access standard has been written in order to support high bitrates and low latency both for uplink and downlink traffic. The data transmissions in LTE are controlled by the radio base station.

Indoor utilization of wireless cellular technology is emerging, and with this development, indoor specific deployments increase to meet network capacity and expectations of end user experience.

It will therefore be of emerging interest to know if a cellular user such as e.g. a UE, in fact is located indoors or outdoors. A network may try to find out if the UE is located indoors is by using positioning services, and more specifically in context of emergency matters. In public safety and emergency scenarios, it would be beneficial to gain better knowledge on e.g. in which building and in which floor a specific UE is located, to be able to warn the user of the UE by notification or call if the user of the UE is unknowably in danger, or the other way around if the UE is making an emergency call it is important to identify if the UE is inside a building to be able to send help.

Other areas of application may for example be network optimization algorithms and tuning where it is of interest to know if a UE is inside or outside a specific building, so that a base station may consider the indoor/outdoor classification in the radio resource management to improve the user experience of the UE. For example, indoor UEs may be assumed to be subject to specific mobility behavior, or may be requested to start monitoring indoor cells on a dedicated frequency carrier.

Unfortunately, indoor GPS positioning is often very inaccurate or even impossible. Some indoor radio systems with very high density of cells, such as e.g. Radio-Frequency Identification (RFID) which is a wireless use of electromagnetic fields to transfer data or similar, for the purposes of automatically identifying and tracking tags attached to objects, may possibly deduct a more accurate user location, but such systems are still very rare. RFID is a short range radio tags solution.

Other possible solutions are Inertial Navigation Systems (INS), with or without GPS support. An INS is a navigation aid that uses a computer, motion sensors and rotation sensors to continuously calculate e.g. the position of a moving object without the need for external references. However, so far none of these solutions is practically feasible for cellular UEs of today.

Document titled "Femtocell power control by discrimination of indoor and outdoor users", WIRELESS TELECOMMUNICATIONS SYMPOSIUM (WTS), IEEE, 13 April 2011, DOI: 10.1109/WTS.2011.5960834 ISBN: 978-1-4577-0162-7, discloses a method of discriminating indoor and outdoor users in a simplified way. Also, based on such discrimination, a downlink power control scheme is provided.

US 2013/237245 A1 discloses a system and method for classifying location of a mobile device in a femtocell and adjusting RF parameters of the femtocell based on the location of the mobile device.

US 2015189568 A1 discloses a method for interference reduction in a radio communication system which includes receiving from at least one mobile station, indications of radiation beams that are transmitted by a base station of the radio communication system and that fulfill or exceed a predefined quality criterion at the mobile station.

EP 2613588 A1 discloses a method and apparatus for managing mobility within a macro cell having a large radio coverage area with Improved handling of high-speed users within a heterogeneous mobile network by means of pico cell's Almost Blank subframes.

US 5987319 A discloses a call-setup method in a digital cellular radio communication system determines a plurality of parameters defining current state of the radio communication system.

WO 2015/041579 A1 discloses a method in a user equipment for obtaining a Modulation and Coding Scheme, MCS is provided. The MCS is to be used for a transmission between the user equipment and any one or more out of the network node.

US 2008/146153 A1 discloses a method and apparatus for optimizing radio performance through inferred knowledge of indoor-outdoor radio status.

Third Generation Partnership Project (3GPP) document titled "Multiplexing and channel coding (Release 12)", 3GPP TS 36.212, September 2015, discloses various downlink control information (DCI) formats and processing structure for DCI.

SUMMARY

The invention is set out in the appended set of claims. Embodiments of the invention are defined by the independent claims. Moreover, examples, embodiments and descriptions, which are no longer covered by the claims are presented not as embodiments of the invention, but as background art or examples useful for understanding the invention.

It is therefore an object of embodiments herein to improve the performance in a wireless communications system.

According to a first example aspect of embodiments herein, the object is achieved by a method performed by a network node. The network node and a UE operate in a wireless communications system. The network node receives from the UE, an indication of whether or not the UE is indoors. The network node then selects transmission parameters based on the received indication.

According to a second example aspect of embodiments herein, the object is achieved by a method performed by a User Equipment, UE. The UE and a network node operate in a wireless communications system. The UE establishes whether or not the UE 120 is indoors.

The UE then sends to the network node an indication of whether or not the UE is indoors. The UE receives a message from the network node. The message comprises information about transmission parameters, selected based on the indication.

According to a third example aspect of embodiments herein, the object is achieved by a network node. The network node and a User Equipment, UE, are operable in a wireless communications system. The network node is configured to:

- receive from the UE an indication of whether or not the UE is indoors,
- select transmission parameters based on the received indication.

According to a fourth example aspect of embodiments herein, the object is achieved by a User Equipment, UE. The UE and a network node are operable in a wireless communications system. The UE is configured to:

- establish whether or not the UE is indoors,
- send to the network node an indication of whether or not the UE is indoors, and

- receive a message from the network node which message comprises information about transmission parameters, selected based on the indication.

An advantage with embodiments herein is that when having a signaling framework supporting information about whether or not the UE is indoor being sent from a UE to the network such as any of the first and second network nodes 111, 112, i.e. having the network knowing if a UE is physically indoors or outdoors, it is possible to carry out SON-like optimization of indoor and/or outdoor network parameters and corresponding performance with respect to UE's location.

Without such signaling support, similar optimizations are up to guestimate algorithms that will become less efficient or not even possible. Even though some embodiments have been summarized above, the claimed subject matter is defined in the attached claims 1-7.

BRIEF DESCRIPTION OF THE DRAWINGS

Examples of embodiments herein are described in more detail with reference to attached drawings in which:

Figure 1 is a schematic block diagram illustrating embodiments of a wireless communications network.
Figure 2 is a flowchart depicting embodiments of a method in a network node.
Figure 3 is a flowchart depicting embodiments of a method in a UE.
Figure 4 is a flowchart depicting embodiments of a method in a network node.
Figure 5 is a sequence diagram depicting a method of signalling.
Figure 6 is a schematic block diagram illustrating embodiments of a network node.
Figure 7 is a schematic block diagram illustrating embodiments of a UE.

DETAILED DESCRIPTION

As part of developing embodiments, a problem will first be identified and discussed. Please note that the terms "UE" and "user" are used interchangeably in this document.

**Node power tuning and handover Cell Specific Offset (CSO) adjustments**

As mentioned above, it is increasingly interesting to know if a UE is located indoors or outdoors. Apart from Public safety emergency and blue-light aspects, for example radio network algorithms, network tuning, network dimensioning, and positioning may use such information to improve network operations and performance.

Typical parameters to adjust are node power and cell-specific handover thresholds, which may also be referred to as offsets, making a certain type of cells more or less appealing for a specific UE to enter.

3GPP fully supports cell specific handover offsets between any cell handover-pair constellation a UE might end up in.

**Modulation and Coding Scheme (MCS) selection for indoor UEs**

As studies of indoor networks and systems become more evolved, it is clear that some of the radio network aspects are different for UEs that are located indoors and served by indoor systems. For example, there are results showing that the knowledge of a UE being indoors could be used to alter/enhance the choice of rank and MCS.

**Indoor localization solutions**

It is increasingly interesting to know if a UE/user is located indoors or outdoors. This is interesting from many aspects, for example radio network algorithms, network tuning, and positioning. It may also be interesting for mobile users to have their UEs change behavior depending on where they are located.

As such, a functionality where the phone by itself evaluates "am I indoors or outdoors" has been discussed.

A framework to carry such of indoor/outdoor information entity to the network was recently suggested and discussed for 3GPP RAN1 (R1-153747).

A UE may be capable of classifying whether it is indoors or outdoors, for example via analysis of magnetic fields, ambient light spectral density, radio network fingerprinting, etc.

Given that such signalling framework and reporting is available, several novel applications emerge.

In radio networks of today, there is a challenge of tuning transition zones between indoor and outdoor systems to full satisfaction automatically.

For example, extensive or ill-advised utilization of Indoor dominance as design paradigm may turn into unwanted, or in worst case severe, indoor-to-outdoor unwanted/undesired/unplanned/unintentional coverage also referred to as coverage bleeding. Thus bleeding here means undesired coverage. Over-shooting of indoor cells to outdoors areas may cause indoor systems such as e.g. In-building Solutions (IBS) to pick up traffic it should not cater for. The intention to protect indoor UEs' integrity by for example avoiding indoor UEs to handover to a macro cell by increasing the power of the indoor system, i.e. imposing indoor dominance, may result in that the handover area between said indoor system and macro system is moved away from the "building" and hence its inhabited UEs. As a consequence, the corresponding handover area may be pushed into unforeseen locations, and into locations that hold significant physical movement of UEs, and as a result that the IBS picks up mobility from outdoor non-building traffic that the indoor system never originally had the intention of serving.

Thus, IBS nodes should be held at power levels that enable them to properly serve their targeted traffic uptake areas, while still having as low power as possible not bleeding into non-desired areas. Alternatively, the CSO-relation between indoor and outdoor cells should be set in such a manner, such as e.g. increasing the indoor cell uptake area, so that an indoor UE served by an outdoor cell ends up being served by the indoor cell. Individual power setting is available and 3GPP supports CSO.

Indoor bleeding observed from an indoor system such as a Radio Dot System (RDS) deployed building has the potential to be dealt with, with reasonable efforts spent, but with the challenge to identify which individual Dot (or group of Dots) that cause(s) the bleeding, but with e.g. a fully split RDS installation having one dot per cell, or future versions with individual dot identification, this becomes straightforward.

**Fraction of indoor users in a network**

There are currently no reliable methods to calculate the fractions of indoor users a specific cell or system holds, and deployment discussions often tend to state "...80% of the systems' users are indoors" without any further motivation.

**MCS selection for indoor UEs**

Typically in LTE products, a downlink session is initiated at lowest MCS and is increased during operations as long as transmission feedback acknowledges error free transmissions.

In observations of typically indoor RDS installations, it is noted that the radio channel is very rich, from a Multiple Input Multiple Output (MIMO) perspective, and given targeted, relative to macro, very dense deployments providing high signal strength levels, the good radio channel is very often under-utilized and/or under-estimated in that first MCS is too conservatively selected.

Especially for small packets, and hence very short transmission times, Link Adaptation (LA) cannot reach "higher MCSs" since the packet is too short and is finished already before LA have had time to ramp up the MCS. Measurements of live traffic also show that these small packet sessions can actually constitute the major traffic of a cell, significantly affecting quality/performance KPIs. Key Performance Indicators (KPIs) are a type of performance measurement, that are used to measure performance e.g. against set goals.

Since cell edge throughput KPIs are defined to reflect "5% of the samples with lowest throughput", i.e. the 5th percentile, starting at a too low MCS will automatically put small-packet/short transmissions in that KPI basket. Since small packet transmissions are very commonly occurring, conservative initial selection of MCS will punish cell edge KPIs.

This may be avoided if MCS would be selected more opportunistically and taking benefit from the rich indoor channel.

Some embodiments herein relate to is-indoor-signaling, and supported indoor system performance optimization. Is-indoor signalling relate to whether or not a UE is indoors, i.e. whether a UE is indoors or outdoors.

Embodiments herein e.g. provide methodologies that may be used to balance and optimize indoor system performance utilizing is-indoor signaling framework.

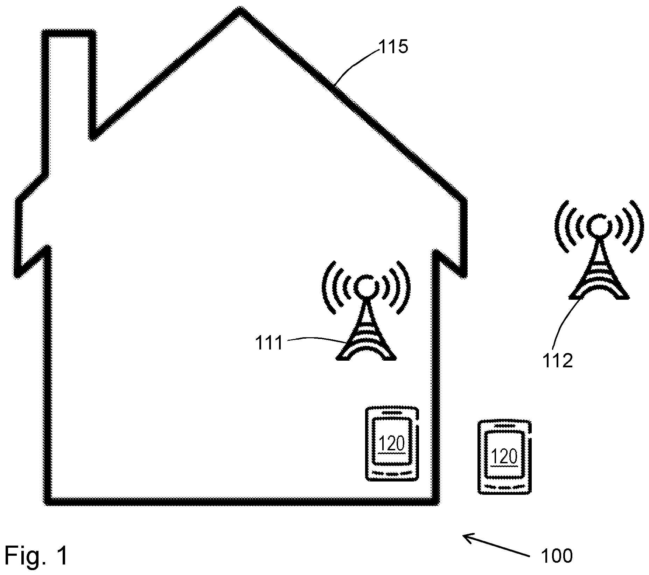

**Figure 1** depicts an example of a **wireless communications network 100** in which embodiments herein may be implemented. The wireless communications network100 may be a wireless communication network such as an LTE, WCDMA, GSM network, any 3GPP cellular network, Wimax, Fifth Generation (5G) 5G/NX or any cellular network or system.

A plurality of network nodes operate in the wireless communications network 100 whereof two, a **first network node 111** and a **second network node 112** are depicted in Figure 1. The network nodes 111, 112 may for example be an eNodeB, a NodeB, a Home Node B, a Home eNode B, a WiFi Access Point (AP) or any other network node capable to serve a UE in a wireless communications network. The network nodes 111, 112 may in some embodiments be a Radio Network Controller (RNC). Both the first network node 111 and the second network node 112 may be located either outdoors or indoors. According to an example scenario the first network node 111 is located indoors e.g. in a **building 115,** and the second network node 112 is located outdoors.

According to another example scenario, it does not matter whether a network node is indoors or outdoors, i.e.

it may relate to any of the first network node 111 and the second network node 112 and in that case the network node referred to as the network node 111, 112.

A **UE 120** operates in the wireless communications network 100. The UE 120 may be served by the first network node 111 or the second network node 112.

The UE 120 may e.g. be a wireless device, a mobile wireless terminal or a wireless terminal, a mobile phone, a computer such as e.g. a laptop, a Personal Digital Assistants (PDAs) or a tablet computer, sometimes referred to as a surf, with wireless capability, or any other radio network units capable to communicate over a radio link in a wireless communications network. Please note the term UE used in this document also covers other wireless devices such as Machine to machine (M2M) devices.

UE sensors may be used to detect whether or not the UE 120 is indoors. For example, the UE 120 may use a light sensor and/or camera to measure the ambient light, which may be used to classify, also referred to as establish, whether the UE is indoors or outdoors. The sensor may for example measure the light intensity, but it may also analyse spectral properties of the ambient light to identify characteristics of light bulbs, LEDs, fluorescent light, halogen lights or other light sources typically found indoors.

The indoor/outdoor classification such as the establishing whether or not the UE 120 is indoor, may be binary, or may be associated with a measurement, or a determined indoor probability. It may also be separated in finer categories, for example with a semi-indoor class.

According to some embodiments herein, an Indoor/outdoor classification reporting is provided as one enhancement for indoor positioning.

The UE 120 may be indoors or not indoors, i.e. outdoors, both cases are shown in Figure 1. The UE 120 is capable of classifying whether it is indoors or outdoors, for example via analysis of magnetic fields, ambient light spectral density, radio network fingerprinting, etc. The UE 120 may be located indoors or outdoors of the building 115. The building 115 may e.g. be a mall a galleria, an arcade a hospital, an airport, an office building of varying sizes and forms, a science park, a university campus, a train station, a sporting venue, an arena, a construction site, a mining facility, a street markets, etc. The building 115 may e.g. comprise one or more companies, stores, etc.

As mentioned above, it is of interest to know if a UE such as the UE 120 is inside or outside of a specific building, so that a base station such as the network node 111, 112 may consider the indoor/outdoor classification in the radio resource management to improve the user experience of the UE. For example, indoor UEs may be assumed to be subject to specific mobility behavior, or may be requested to start monitoring indoor cells on a dedicated frequency carrier.

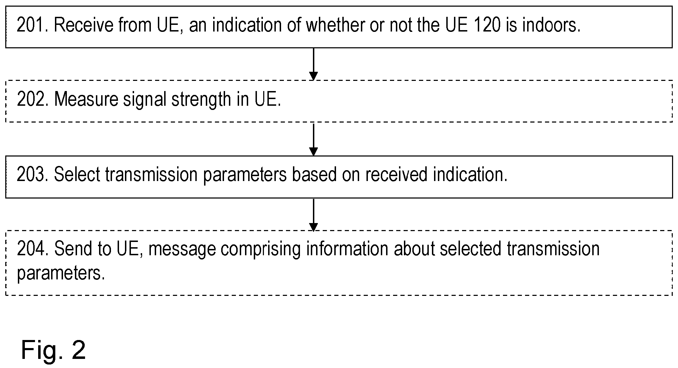

Example embodiments of a method performed by a network node 111, 112 such as any of the first or second network nodes 111, 112 are described with reference to a flowchart depicted in **Figure 2**. The network node 111, 112, and the UE 120 operate in a wireless communications system 100. The method comprises the following actions, which actions may be performed in any suitable order.

**Action 201**

According to an example scenario, the UE 120 informs the network node 111, 112, whether it is indoors or not. This is to assist the network node 111, 112 in selecting optimal transmission parameters for the UE 120. Thus in this action the network node 111, 112, receives from the UE 120 an indication of whether or not the UE 120 is indoors. The indication may be an indicator such as e.g. an is_indoor flag, or other indicators such as measurement results or estimations of parameters like e.g. ambient light spectrum, ambient light transients, etc.

Please note that the UE may in some embodiments establish whether or not the UE is outdoor. If established that the UE 120 is outdoor, it means that it is established that the UE 120 is not indoor. If established that the UE 120 is not outdoor, it means that it is established that the UE 120 is indoor.

**Action 202**

To further prepare for and take into consideration when selecting optimal transmission parameters, the network node 111, 112, may in some embodiments obtain signal strength measurements from the UE 120. For example via commanding the UE 120 to send instant measurements, periodical measurements, or just receiving a measurement report from the UE 120. The UE 120 may perform the actual measurement.

**Action 203**

Since the network node 111, 112 is informed by the UE 120 whether UE 120 is indoors or not, the network node 111, 112 takes that into consideration when selecting transmission parameters. This is an advantage since the parameters may be fine-tuned to give the best performance utilizing the knowledge that the UE 120 is indoors. Thus the network node 111, 112, selects transmission parameters based on the received indication.

The transmission parameters may e.g. comprise any one or more out of MCS, LA and MIMO rank.

In some embodiments, the network node 111, 112 is MIMO capable, the selection of transmission parameters based on the received indication comprises selecting a rank scheme related to the MIMO. In case the UE 120 is indicated as indoor, the rank scheme is selected such that a session with the UE 120 will be initiated directly on a higher rank scheme than the rank scheme used if the UE 120 would not have been indicated as indoor.

In some embodiments, which may be combined with the embodiments above, when the UE 120 is indicated as indoor, the selection of the transmission parameters based on the received indication further comprises selecting an MCS that is more aggressive than what have been selected if the UE 120 would not have been indicated as indoor.

The word aggressive used in this document means that the choice is done with less redundancy enabling higher performance if successful but at a higher risk of transmission failure.

As mentioned above in action 202, the network node 111, 112, may in some embodiments have obtained signal strength from the UE 120. In these embodiments the network node 111, 112 may select the transmission parameters further based on the obtained signal strength. This is to be able to further optimize the selection of transmission parameters by e.g. initiating a more aggressive transmission if the network node 111, 112 knows that the UE 120 is indoors and has a high signal strength.

**Action 204**

In some embodiments, the network node 111, 112, sends a message to the UE 120. The message comprises information about the selected transmission parameters. The message may e.g. in LTE be sent in a scheduling assignment message.

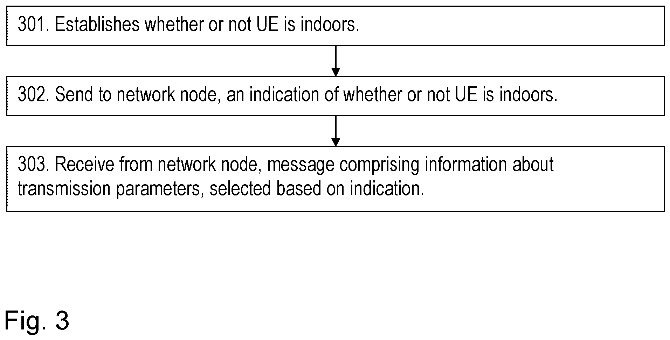

Example embodiments of a method performed by the UE 120 are described with reference to a flowchart depicted in **Figure 3**. The UE 120 and the network node 111, 112 operate in a wireless communications system 100. The method comprises the following actions, which actions may be performed in any suitable order.

**Action 301**

The UE 120 may be indoors or outdoors. The UE 120 establishes whether or not the UE 120 is indoors. This may e.g. be performed by the UE 120 being capable of classifying whether it is indoors or outdoors, for example via analysis of magnetic fields, ambient light spectral density, radio network fingerprinting, etc.

**Action 302**

The UE 120 informs the network node 111, 112, of the establishment whether or not it is indoors. This is to assist the network node 111, 112 in selecting optimal transmission parameters for the UE 120. The UE 120 therefore sends to the network node 111, 112 an indication of whether or not the UE 120 is indoors.

**Action 303**

The network node 111, 112 selects transmission parameters based on the received indication as described in Action 203 above and informs the UE 120 about the selected transmission parameters as described in Action 204 above. UE 120 thus receives a message from the network node 111, 112. The message comprises information about transmission parameters, selected based on the indication.

The transmission parameters may comprise any one or more out of MCS LA and MIMO rank.

In some embodiments, the UE 120 is MIMO capable, and the message may comprising information about transmission parameters based on the indication may further comprise a rank scheme related to the MIMO. In case the UE 120 is indicated as indoor, the rank is such that a session to the UE 120 will be initiated directly on a higher rank scheme than the rank scheme used if the UE 120 would not have been indicated as indoor.

According to some embodiments that may be combined with the embodiments above, the information about the selected transmission parameters based on the received indication may further comprise information about a selected MCS. When the UE 120 is indicated as indoor, the MCS is selected to be more aggressive than what would have been selected if the UE 120 would not have been indicated as indoor.

The transmission parameters may be selected further based on an obtained signal strength from the UE 120.

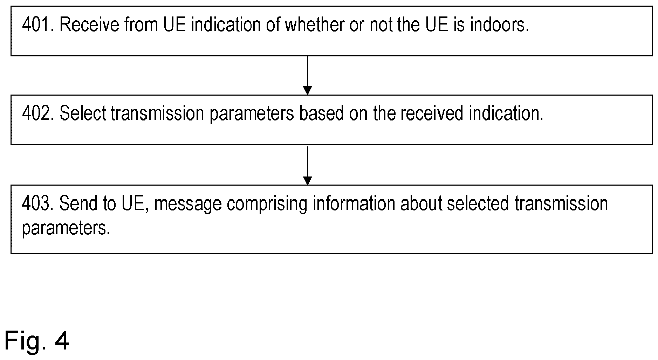

Some example embodiments of a method performed by the network node 111, 112 such as any of the first or second network nodes 111, 112 are described with reference to a flowchart depicted in **Figure 4.**

The network node 111 and the UE 120 are operable in a wireless communications system 100. The method comprising any one out of:

- **receiving 401** from the UE 120 an indication of whether or not the UE 120 is indoors,
- **selecting 402** transmission parameters such as Modulation and Coding Scheme or link adaptation based on the received indication, and
- **sending 403** a message to the UE 120, which message comprises information about the selected transmission parameters such as Modulation and Coding Scheme or link adaptation.

Some further example embodiments of a method performed by the UE 120 is described with reference to a flowchart depicted in **Figure 3.**

According to an example aspect of embodiments herein, the object is achieved by a method performed by a User Equipment, UE, 120. See **Figures 1 and 3.** The UE, 120 and a network node 111, 112 such as any of the first and second network nodes 111, 112 are operable in a wireless communications system. The method comprises:

**Establishing 301** whether or not the UE 120 is indoors,
**sending 302** to the network node 111, 112 an indication of whether or not the UE 120 is indoors, and
**receiving 303** a message from the network node 111, 112, which message comprises information about transmission parameters such as a Modulation and Coding Scheme or link adaptation, selected based on the indication.

Embodiment's herein will now be further described and explained. The text below is applicable to and may be combined with any suitable embodiment described above.

According to embodiments herein, means of reporting and/or signaling of the measurement of the detection may be used, for example an indoor/outdoor bit, informing the network such as the network node 110 that the UE 120 has classified itself as being indoor or outdoor. In a further embodiment, the reporting may be extended to e.g. a 8 bit value resolving a UE-decided probability of being indoor or outdoor, or a more elaborated signaling/reporting where the UE sends up a larger amount of information, making a decision basis for the network to estimate if the UE is indoors or outdoors.

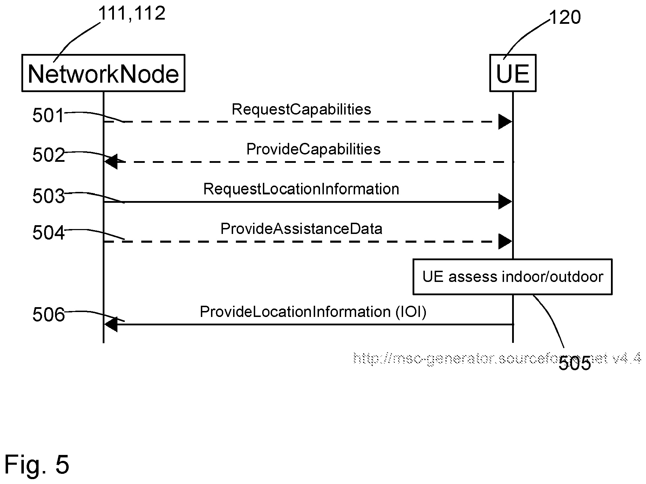

An example of such signaling scheme is illustrated in **Figure 5.**

Indoor/outdoor classification for emergency call positioning may be used according to embodiments herein, in line with the existing reporting structures in 3GPP from a network node perspective:

The network node 111, 112 **requests capabilities 501** from the UE 120, e.g. Request for UE capabilities regarding indoor classification.

The UE 120 **sends 502** information about its **capabilities** from the network node 111, 112.

The network node 111, 112 then **requests location information 503** from the UE 120, such as request location information including the indoor classification e.g. information of whether or not being indoor, possibly providing assistance data, see below.

The network node 111, 112 may **provide assistance data 504** from the UE 120. The assistant data may e.g. comprise GPS position or other additional positioning information available in the UE 120.

The UE 120 **assesses 505** whether being outdoor or indoor, related to establishing whether or not being indoor in Action 301.

The UE then **provides location information 506** to the network node 111, 112, such as information about the outcome of the assessment of whether being outdoor or indoor also referred to as whether or not being indoor and/or reception of location information including indoor classification.

Figure 5 provides generic signalling to support indoor classification reporting, essentially using LTE Positioning Protocol (LPP) messages where the network node 111, 112 is a location server. Alternatively, the indoor classification information may be provided via LPP extensions (LPPe) or Radio Resource Control (RRC)+LPPe. For LPP/LPPe, the benefit is that the indoor classification signalling may be tailored and optimized to the E911 use cases, while for RRC the benefit is that the indoor classification signalling may be more generic and supporting also RRM use cases. E911 is a system e.g. used in North America that links emergency callers with the appropriate public resources.

For E911 purposes, the estimated position may be mapped to a dispatchable address. However, albeit reasonably good accuracy may be provided by baseline techniques such as OTDOA, the mapping to a civic address may be inaccurate. In particular, the UE 120 may be indoors at the estimated address, or outdoors in the vicinity to the estimated address. An advantage would therefore be to also have the capability to estimate whether the UE is indoors or outdoors. This will facilitate the planning of public safety operations in response to the E911 call.

**MCS selection offset for indoor users**

MCS selection may in more detail be described as Modulation order and transport block size determination.

For example, in the 3GPP specification 36.213 it is described in section 7.1.7 as follows:

<u>7.1.7 Modulation order and transport block size determination</u>

To determine the modulation order and transport block size(s) in the physical downlink shared channel, the UE shall first

- read the 5-bit "modulation and coding scheme" field ($I_{\text{MCS}}$) in the DCI and second if the Downlink Control Information (DCI) Cyclic Redundancy Check (CRC) is scrambled by P-RNTI, RA-RNTI, or SI-RNTI then

- for DCI format 1A:

 ∘ set the Table 7.1.7.2.1-1 column indicator $N_{\text{PRB}}$ to $N_{\text{PRB}}^{\text{1A}}$ from subclause 5.3.3.1.3

- for DCI format 1C:
 ∘ use Table 7.1.7.2.3-1 for determining its transport block size. else

- set $N'_{\text{PRB}}$ to the total number of allocated PRBs based on the procedure defined in subclause 7.1.6.

if the transport block is transmitted in DwPTS of the special subframe in frame structure type 2, then

set the Table 7.1.7.2.1-1 column indicator $N_{PRB} = \max\left\{ \left\lfloor N'_{\text{PRB}} \times 0.75 \right\rfloor, \quad 1 \right\}$, else, set the Table 7.1.7.2.1-1 column indicator $N_{PRB} = N'_{PRB}$.

Wherein:

 P-RNTI means Paging - Radio Network Temporary Identifier (RNTI)
 RA-RNTI means Random Access RNTI
 SI-RNTI means System Information RNTI
 DwPTS means Downlink Pilot Time Slot.

The UE may skip decoding a transport block in an initial transmission if the effective channel code rate is higher than 0.930, where the effective channel code rate is defined as the number of downlink information bits, including CRC bits, divided by the number of physical channel bits on Physical Downlink Shared Channel (PDSCH). If the UE skips decoding, the physical layer indicates to higher layer that the transport block is not successfully decoded. For the special subframe configurations 0 and 5 with normal downlink CP or configurations 0 and 4 with extended downlink CP, shown in Table 4.2-1 of 3GPP TS 36.211: "Evolved Universal Terrestrial Radio Access (E-UTRA); Physical channels and modulation", there shall be no PDSCH transmission in DwPTS of the special subframe.

Furthermore, MCS selection may be described as deciding the transport format parameters. As mentioned above, in some embodiments, the selected transmission parameters based on the received indication may comprise information about a selected MCS. The transport format parameters may for example for LTE be Modulation order and Transport Block Size (TBS). The MCS may be signalled to the UE 120 in a scheduling assignment. The MCS together with the resource assignment will determine the TBS and coding rate as specified in 3GPP TS 36.213.

Furthermore, in a MIMO system, the rank of the channel is assessed and a rank to be used is decided. A rank refers to the rank of the channel matrix and estimates how many layers and/or streams that can be transmitted over the radio channel simultaneously.

In the downlink, the channel quality is measured by the UE 120 and sent to the RBS, such as the network node 111, 112, as a Channel Quality Indicator (CQI). The CQI is part of the channel feedback reports which also may comprise for example a rank indicator (RI). Channel feedback reports may for example be sent periodically at a configured period of time. It may also be sent based on RBS such as the network node 111, 112 requests. The UE 120 may send a wideband estimate, estimated over the whole downlink bandwidth, and/or narrowband, estimations over several smaller parts of the downlink bandwidth, CQI. This reported CQI may be used by the Link Adaptation. At the RBS, eNB, nodeB etc, the CQI(s) is/are interpreted to decide the suitable modulation and coding, e.g. modulation order and transport block size determination.

The MCS choice may be made biased, such as influenced, depending on for example reported and/or estimated rank, rank indicator, may for example be a channel rank of two or larger. The channel quality metrics, such as for example CQI, or interpretations thereof in other transformed metrics may of course be filtered to enhance the estimation.

Such a bias may according to embodiments herein, be made dependent on the reported state of the UE 120 as being indoors or outdoors.

Measurements of live data traffic have shown that often enough a majority of the data traffic may comprise very short small sessions, living only for a few Transmission Time Intervals (TTIs). For such sessions, it may often be seen that the throughput suffers from startup or slow start effects, resulting from initiation of algorithms and protocols etc.

For example indoor environments often support a higher degree of higher rank, and having a UE start off on rank 1 will result in lower throughput and not staying on the channel long enough to even adapt up to rank 2.

In such an environment, and according to embodiments herein, the indication that the UE 120 is indoors, which e.g. may be an is_indoor flag, or other indicators of that the UE 120 is served indoors by a MIMO-capable node such as the first network node 111, may be used as information to initiate the UE 120 directly on a rank 2 scheme, or higher if applicable, and maybe also on a more aggressive MCS. This leads to improved throughput KPIs for this majority of sessions that have small session sizes. The method may further use a simple measurement of for example Reference Signal Received Power (RSRP) signal strength as a quick guide to if and if so how aggressively the session should be initiated.

In this way, is-indoor-signaling framework for SON network operation algorithms may be used to optimize indoor and/or outdoor network parameters and corresponding performance.

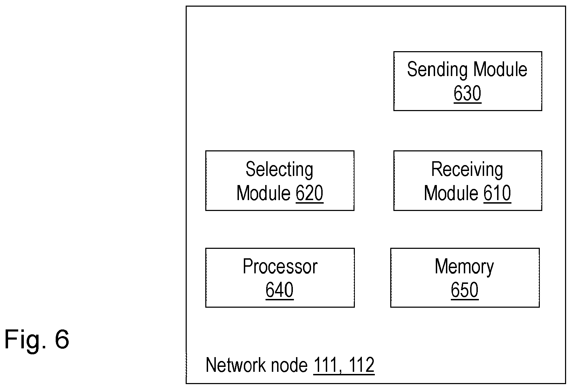

To perform the method actions described above in relation to Figure 1 and 2, the network node 111, 112, such as any of the first or second network nodes 111, 112 may comprise the arrangement depicted in **Figure 6**.

As mentioned above, the network node 111, 112 and the UE 120 are operable in the wireless communications system 100.

The network node 111, 112 is configured to, e.g. by means of a **receiving module 610** configured to, receive from the UE 120 an indication of whether or not the UE 120 is indoors.

The network node 111, 112 is configured to, e.g. by means of a **selecting module 620** configured to, select transmission parameters based on the received indication. The transmission parameters may e.g. comprise any one or more out of: MCS, LA MIMO rank.

In some embodiments, the network node 111, 112 is MIMO capable, and wherein the network node 111, 112 further is configured to, e.g. by means of the selecting module 620 configured to, select transmission parameters based on the received indication by selecting a rank scheme related to the MIMO. In case the UE 120 is adapted to be indicated as indoor, rank scheme related to the MIMO is selected such that a session with the UE 120 will be initiated directly on a higher rank scheme than the rank scheme used if the UE 120 would not have been indicated as indoor.

In a case wherein the UE 120 is adapted to be indicated as indoor, the network node 111, 112 may further be configured to, e.g. by means of the selecting module 620 configured to, select transmission parameters based on the received indication by selecting an MCS that is more aggressive than what have been selected if the UE 120 would not have been indicated as indoor.

In some embodiments, the network node 111, 112 is further configured to: obtain signal strength measured by the UE 120. In these embodiments the network node 111, 112 may further be configured to, e.g. by means of the selecting module 620 configured to, select the transmission parameters further based on the obtained signal strength.

The network node111, 112 may further be configured to, e.g. by means of a **sending module 630** configured to, send a message to the UE 120. The message comprises information about the selected transmission parameters.

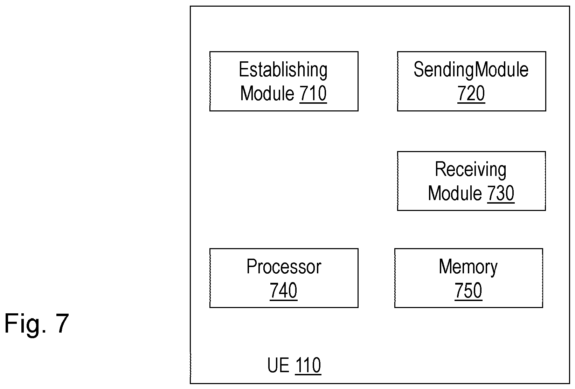

To perform the method actions according to some embodiments described above in relation to Figure 1 and 3, the UE 120 may comprise the arrangement depicted in **Figure 7.** As mentioned above the UE 120 and the network node 111, 112 are operable in the wireless communications system 100.

The UE 120 is configured to, e.g. by means of an **establishing module 710** configured to, establish whether or not the UE 120 is indoors.

The UE 120 is further configured to, e.g. by means of a **sending module 720** configured to, send to the network node 111, 112 an indication of whether or not the UE 120 is indoors.

The UE 120 is further configured to, e.g. by means of a **receiving module 730** configured to, receive a message from the network node 111, 112. The message comprises information about transmission parameters, selected based on the indication.

The transmission parameters are adapted to e.g. comprise any one or more out of: an MCS, a LA and a MIMO rank.

In some embodiments, the UE 120 is Multiple Input Multiple Output, MIMO, capable. The UE 120 may be adapted to be indicated as indoor. In that case, the message adapted to comprise information about transmission parameters based on the indication may comprise a rank scheme related to the MIMO such that a session to the UE 120 will be initiated directly on a higher rank scheme than the rank scheme used if the UE 120 would not have been indicated as indoor.

The information about the selected transmission parameters based on the received indication may further be adapted to comprise information about a selected MCS that is more aggressive than what would have been selected if the UE 120 would not have been indicated as indoor.

In some embodiments, the UE 120 further is configured to select transmission parameters further based on a measured signal strength from the UE 120.

The embodiments herein may be implemented through one or more processors, such as a **processor 640** in the network node 111, 112 depicted in Figure 6, and a **processor 740** in the UE 120 depicted in Figure 7, together with computer program code for performing the functions and actions of the embodiments herein. The program code mentioned above may also be provided as a computer program product, for instance in the form of a data carrier carrying computer program code for performing the embodiments herein when being loaded into the respective network node 111, 112, and/or the UE 120. One such carrier may be in the form of a CD ROM disc. It is however feasible with other data carriers such as a memory stick. The computer program code may furthermore be provided as pure program code on a server and downloaded to the respective network node 111, 112, and/or UE 120.

The respective network node 111, 112, and/or UE 120 may further comprise a **memory 650, and 750** comprising one or more memory units. The respective memory comprises instructions executable by the respective processor.

The memory is arranged to be used to store e.g. information, indications, parameters, data, configurations, and applications to perform the methods herein when being executed in the respective network node 111, 112, and/or UE 120.

Those skilled in the art will also appreciate that the modules in the respective network node 111, 112, and/or UE 120, described above may refer to a combination of analog and digital circuits, and/or one or more processors configured with software and/or firmware, e.g. stored in the respective memory, that when executed by the respective one or more processors as described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

According to some embodiments herein, an example of the network node 111, 112, such as any of the first and second network nodes 111, 112 is provided. See **Figures 1 and 6**. The network node 111, 112 and the User Equipment, UE, 120 are operable in a wireless communications system 100.

The network node 111, 112 is configured to, e.g. by means of a **receiving module 610** configured to, receive from the UE 120 an indication of whether or not the UE 120 is indoors,

The network node 111, 112 is further configured to, e.g. by means of a **selecting module 620** configured to select transmission parameters such as Modulation and Coding Scheme or link adaptation based on the received indication.

The network node 111, 112 is further configured to, e.g. by means of a **sending module 630** configured to, send a message to the UE 120, which message is adapted to comprise information about the transmission parameters such as selected Modulation and Coding Scheme or link adaptation.

According to some embodiments herein, an example of the-UE 120 is provided. See **Figures 1 and 7.** The UE 120 and a network node 111, 112 such as any of the first and second network nodes 111, 112 are operable in a wireless communications system 100.

The UE 120 is configured to, e.g. by means of an **establishing module 710** configured to, establish whether or not the UE 120 is indoors.

The UE 120 is further configured to, e.g. by means of a **sending module 720** configured to, send to the network node 111, 112 an indication of whether or not the UE 120 is indoors.

The UE 120 is further configured to, e.g. by means of a **receiving module 730** configured to, receive a message to from the network node 111, 112. The message is adapted to comprise information about transmission parameters such as a Modulation and Coding Scheme or link adaptation, selected based on the indication.

When using the word "comprise" or "comprising" it shall be interpreted as nonlimiting, i.e. meaning "consist at least of".

Abbreviations

| Abbreviation | Explanation |
| --- | --- |
| 3GPP | 3rd Generation Partnership Project |
| BS | Base Station, in LTE eNB |
| CSO | Cell Specific Offset |
| CQI | Channel Quality Indicator |
| eNB or eNodeB | Evolved Node B |
| IE | Information Element |
| LPP | LTE Positioning Protocol |

(continued)

| Abbreviation | Explanation |
|---|---|
| LPPe | LPP Extensions |
| LTE | 3GPP Long Term Evolution |
| MCS | Modulation and Coding Scheme |
| MDT | Minimize Drive Test |
| MIMO | Multiple Input Multiple Output |
| PCIUF | Per Cell Indoor User Fraction |
| PNSIUF | Per Network Subset Indoor User Fraction |
| RDS | Radio Dot System |
| RRC | Radio Resource Control |
| PCI | Physical Cell Identity |
| SON | Self-Optimizing Network |
| TTI | Transmission Time Interval |
| TBS | Transport Block Size |
| UE | User Equipment |

**Claims**

1. A method performed by a network node (111, 112), the network node (111, 112) and a User Equipment, UE, (120) operate in a wireless communications system (100), the method comprising:

   - *receiving* (201) from the UE (120) an indication of whether or not the UE (120) is indoors,
   - *selecting* (203) transmission parameters based on the received indication, wherein the transmission parameters are the rank scheme related to Multiple Input Multiple Output, MIMO,
   - *sending* (204) a message to the UE (120), wherein the message comprises information about the selected transmission parameters.

2. A network node (111, 112), which network node (111, 112) and a User Equipment, UE, (120) are operable in a wireless communications system (100), the network node (111, 112) being configured to:

   - *receive* from the UE (120) an indication of whether or not the UE (120) is indoors,
   - *select* transmission parameters based on the received indication, wherein the transmission parameters are the rank scheme related to Multiple Input Multiple Output, MIMO,
   - *send* a message to the UE (120), wherein the message comprises information about the selected transmission parameters.

3. A method performed in a wireless communications system (100), wherein the wireless communications system (100) comprises: a User Equipment, UE, (120) and a network node (111, 112), the method, performed by the UE (120), comprising:

   - *establishing* (301) whether or not the UE (120) is indoors,
   - *sending* (302) to the network node (111, 112) an indication of whether or not the UE (120) is indoors, and
   - *receiving* (303) a message from the network node (111, 112) which message comprises information about transmission parameters related to downlink transmissions, based on the indication, and wherein the information about the transmission parameters based on the indication further comprises a rank scheme related to Multiple Input Multiple Output, MIMO, wherein the UE is a MIMO capable UE,

   the method, performed by the network node (111, 112), comprising:

   - *receiving* (201), from the UE (120), the indication whether or not the UE (120) is indoors,
   - *selecting* (203) the transmission parameters based on the received indication,

   wherein the transmission parameters are the rank scheme related to Multiple Input Multiple Output, MIMO,

- *sending* (204) the message to the UE (120).

4. A wireless communication network (100) comprising: a User Equipment, UE, (120) and a network node (111, 112), the UE (120) being configured to:

- *establish* whether or not the UE (120) is indoors,
- *send* to the network node (111, 112) an indication of whether or not the UE (120) is indoors, and
- *receive* a message from the network node (111, 112) which message comprises information about transmission parameters related to downlink transmissions, based on the indication, and wherein the information about the transmission parameters based on the indication further is adapted to comprise a rank scheme related to Multiple Input Multiple Output, MIMO, wherein the UE is a MIMO capable UE,

wherein the network node (111, 112) is configured to:

- *receive,* from the UE (120), the indication whether or not the UE (120) is indoors,
- *select* the transmission parameters based on the received indication wherein the transmission parameters are the rank scheme related to Multiple Input Multiple Output, MIMO,
- *send* the message to the UE (120).

**Patentansprüche**

1. Verfahren, das von einem Netzknoten (111, 112) durchgeführt wird, wobei der Netzknoten (111, 112) und eine Benutzereinrichtung, UE, (120) in einem drahtlosen Kommunikationssystem (100) arbeiten, wobei das Verfahren Folgendes umfasst:

- *Empfangen* (201) einer Angabe von der UE (120), ob sich die UE (120) in Innenräumen befindet oder nicht,
- *Auswählen* (203) von Übertragungsparametern basierend auf der empfangenen Angabe, wobei die Übertragungsparameter das Rangschema sind, das sich auf Mehrfacheingang-Mehrfachausgang, MIMO, bezieht,
- *Senden* (204) einer Nachricht an die UE (120), wobei die Nachricht Informationen über die ausgewählten Übertragungsparameter umfasst.

2. Netzknoten (111, 112), wobei der Netzknoten (111, 112) und eine Benutzereinrichtung, UE, (120) in einem drahtlosen Kommunikationssystem (100) betreibbar sind, wobei der Netzknoten (111, 112) konfiguriert ist zum:

- *Empfangen* einer Angabe von der UE (120), ob sich die UE (120) in Innenräumen befindet oder nicht,
- *Auswählen* von Übertragungsparametern basierend auf der empfangenen Angabe, wobei die Übertragungsparameter die Rangordnung sind, die sich auf Mehrfacheingang-Mehrfachausgang, MIMO, bezieht,
- *Senden* einer Nachricht an die UE (120), wobei die Nachricht Informationen über die ausgewählten Übertragungsparameter umfasst.

3. Verfahren, das in einem drahtlosen Kommunikationssystem (100) durchgeführt wird, wobei das drahtlose Kommunikationssystem (100) Folgendes umfasst: eine Benutzereinrichtung, UE, (120) und einen Netzknoten (111, 112), wobei das von der UE (120) durchgeführte Verfahren Folgendes umfasst:

- *Festlegen* (301), ob sich die UE (120) in Innenräumen befindet oder nicht,
- *Senden* (302) einer Angabe an den Netzknoten (111, 112), ob sich die UE (120) in Innenräumen befindet oder nicht, und
- *Empfangen* (303) einer Nachricht von dem Netzknoten (111, 112), wobei die Nachricht Informationen über Übertragungsparameter umfasst, die sich auf Downlink-Übertragungen beziehen, basierend auf der Angabe, und wobei die Informationen über die Übertragungsparameter basierend auf der Angabe ferner ein Rangschema umfassen, das sich auf Mehrfacheingang-Mehrfachausgang, MIMO, bezieht, wobei die UE eine MIMO-fähige UE ist,

das Verfahren, das durch den Netzknoten (111, 112) durchgeführt wird, umfassend:

- *Empfangen* (201) der Angabe von der UE (120), ob sich die UE (120) in Innenräumen befindet oder nicht,
- *Auswählen* (203) der Übertragungsparameter basierend auf der empfangenen Angabe,

wobei die Übertragungsparameter das Rangschema sind, das sich auf Mehrfacheingang-Mehrfachausgang, MIMO, bezieht,

- *Senden* (204) der Nachricht an die UE (120).

4. Drahtloses Kommunikationsnetz (100), umfassend: eine Benutzereinrichtung, UE, (120) und einen Netzknoten (111, 112), wobei die UE (120) konfiguriert ist zum:

- *Feststellen,* ob sich die UE (120) in Innenräumen befindet oder nicht,
- *Senden* einer Angabe an den Netzknoten (111, 112), ob sich die UE (120) in Innenräumen befindet oder nicht, und
- *Empfangen* einer Nachricht von dem Netzknoten (111, 112), wobei die Nachricht Informationen über Übertragungsparameter umfasst, die sich auf Downlink-Übertragungen beziehen, basierend auf der Angabe, und wobei die Informationen über die Übertragungsparameter basierend auf der Angabe ferner dafür ausgelegt sind, ein Rangschema zu umfassen, das sich auf Mehrfacheingang-Mehrfachausgang, MIMO bezieht, wobei die UE eine MIMO-fähige UE ist,

wobei der Netzknoten (111, 112) konfiguriert ist zum:

- *Empfangen,* von der UE (120), der Angabe, ob sich die UE (120) in Innenräumen befindet oder nicht,
- *Auswählen* der Übertragungsparameter basierend auf der empfangenen Angabe, wobei die Übertragungsparameter das Rangschema sind, das sich auf Mehrfacheingang-Mehrfachausgang, MIMO bezieht,
- *Senden* der Nachricht an die UE (120).

## Revendications

1. Procédé mis en œuvre par un nœud de réseau (111, 112), le nœud de réseau (111, 112) et un équipement utilisateur, UE, (120) opèrent dans un système de communication sans fil (100), le procédé comprenant :

- la *réception* (201) depuis l'UE (120) d'une indication indiquant si l'UE (120) est ou non à l'intérieur,
- la *sélection* (203) de paramètres de transmission sur la base de l'indication reçue, dans lequel les paramètres de transmission sont le schéma de rang se rapportant à des entrées multiples/sorties multiples, MIMO,
- l'envoi (204) d'un message à l'UE (120), dans lequel le message comprend des informations concernant les paramètres de transmission sélectionnés.

2. Nœud de réseau (111, 112), lequel nœud de réseau (111, 112) et un équipement utilisateur, UE, (120) sont opérationnels dans un système de communication sans fil (100), le nœud de réseau (111, 112) étant configuré pour :

- *recevoir* depuis l'UE (120) une indication indiquant si l'UE (120) est ou non à l'intérieur,
- *sélectionner* des paramètres de transmission sur la base de l'indication reçue, dans lequel les paramètres de transmission sont le schéma de rang se rapportant à des entrées multiples/sorties multiples, MIMO,
- *envoyer* un message à l'UE (120), dans lequel le message comprend des informations concernant les paramètres de transmission sélectionnés.

3. Procédé mis en œuvre dans un système de communication sans fil (100), dans lequel le système de communication sans fil (100) comprend : un équipement utilisateur, UE, (120) et un nœud de réseau (111, 112), le procédé, mis en œuvre par l'UE (120), comprenant :

- le *fait d'établir* (301) si l'UE (120) est ou non à l'intérieur,
- l'envoi (302) au nœud de réseau (111, 112) d'une indication indiquant si l'UE (120) est ou non à l'intérieur, et
- la *réception* (303) d'un message depuis le nœud de réseau (111, 112) lequel message comprend des informations concernant des paramètres de transmission se rapportant à des transmissions en liaison descendante, sur la base de l'indication, et dans lequel les informations concernant les paramètres de transmission sur la base de l'indication comprennent en outre un schéma de rang se rapportant à des entrées multiples/sorties multiples, MIMO, dans lequel l'UE est un UE à capacité MIMO,

le procédé, mis en œuvre par le nœud de réseau (111, 112), comprenant :

- la *réception* (201) depuis l'UE (120) de l'indication indiquant si l'UE (120) est ou non à l'intérieur,
- la *sélection* (203) des paramètres de transmission sur la base de l'indication reçue,

dans lequel les paramètres de transmission sont le schéma de rang se rapportant à des entrées multiples/sorties multiples, MIMO,

- l'envoi (204) du message à l'UE (120).

4. Réseau de communication sans fil (100) comprenant : un équipement utilisateur, UE, (120) et un nœud de réseau (111, 112), l'UE (120) étant configuré pour :

- *établir* si l'UE (120) est ou non à l'intérieur,
- *envoyer* au nœud de réseau (111, 112) une indication indiquant si l'UE (120) est ou non à l'intérieur, et
- *recevoir* un message depuis le nœud de réseau (111, 112) lequel message comprend des informations concernant des paramètres de transmission se rapportant à des transmissions en liaison descendante, sur la base de l'indication, et dans lequel les informations concernant les paramètres de transmission sur la base de l'indication sont en outre conçues pour comprendre un schéma de rang se rapportant à des entrées multiples/sorties multiples, MIMO, dans lequel l'UE est un UE à capacité MIMO,

dans lequel le nœud de réseau (111, 112) est configuré pour :

- *recevoir* depuis l'UE (120), l'indication indiquant si l'UE (120) est ou non à l'intérieur,
- *sélectionner* les paramètres de transmission sur la base de l'indication reçue, dans lequel les paramètres de transmission sont le schéma de rang se rapportant à des entrées multiples/sorties multiples, MIMO,
- *envoyer* le message à l'UE (120).

Fig. 1

201. Receive from UE, an indication of whether or not the UE 120 is indoors.

202. Measure signal strength in UE.

203. Select transmission parameters based on received indication.

204. Send to UE, message comprising information about selected transmission parameters.

Fig. 2

301. Establishes whether or not UE is indoors.

302. Send to network node, an indication of whether or not UE is indoors.

303. Receive from network node, message comprising information about transmission parameters, selected based on indication.

Fig. 3

401. Receive from UE indication of whether or not the UE is indoors.

402. Select transmission parameters based on the received indication.

403. Send to UE, message comprising information about selected transmission parameters.

Fig. 4

111,112                                                      120

| NetworkNode |                                        | UE |

501  ——  RequestCapabilities  ————————————▶

502  ◀————  ProvideCapabilities  ————————————

503  ——  RequestLocationInformation  ————————▶

504  ——  ProvideAssistanceData  ————————————▶

| UE assess indoor/outdoor |

506  ◀——  ProvideLocationInformation (IOI)  ——

505

Fig. 5

Fig. 6

Sending Module
630

Selecting
Module 620

Receiving
Module 610

Processor
640

Memory
650

Network node 111, 112

| | |
|---|---|
| Establishing Module 710 | SendingModule 720 |
| | Receiving Module 730 |
| Processor 740 | Memory 750 |

UE 110

Fig. 7

**EP 3 360 369 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2013237245 A1
- US 2015189568 A1
- EP 2613588 A1
- US 5987319 A
- WO 2015041579 A1
- US 2008146153 A1

### Non-patent literature cited in the description

- Femtocell power control by discrimination of indoor and outdoor users. WIRELESS TELECOMMUNICATIONS SYMPOSIUM (WTS). IEEE, 13 April 2011
- Multiplexing and channel coding (Release 12). *3GPP TS 36.212,* September 2015